# EUROPÄISCHE PATENTSCHRIFT

(11) **EP 3 829 965 B1**
(45) Veröffentlichungstag und Bekanntmachung des Hinweises auf die Patenterteilung: **01.04.2026**
(21) Anmeldenummer: 19744640.4
(22) Anmeldetag: 11.07.2019
(51) Int. Cl.: B62J 43/20, H01M 50/262, H01M 50/202, H01M 50/24, B62M 6/90, B62H 5/00, B60K 1/04

(54) **HALTESYSTEM FÜR EINEN ENERGIESPEICHER SOWIE ZWEIRAD MIT DIESEM HALTESYSTEM**
MOUNTING SYSTEM FOR AN ENERGY STORE, AND TWO-WHEELED VEHICLE
SYSTÈME DE RETENUE POUR UN ACCUMULATEUR D'ÉNERGIE ET DEUX-ROUES ÉQUIPÉ DUDIT SYSTÈME DE RETENUE

(30) Priorität: 27.07.2018 DE 102018212574
(43) Veröffentlichungstag der Anmeldung: 09.06.2021
(73) Patentinhaber: Robert Bosch GmbH, 70442 Stuttgart (DE)
(72) Erfinder: SCHUMACHER, Christoph, 72144 Dusslingen (DE); MEHLO, Dennis, 72762 Reutlingen (DE); BAYER, Lisa, 70563 Stuttgart (DE); JABS, Volker, 72144 Dusslingen (DE); KOEDER, Thilo, 70839 Gerlingen (DE); ALISIC, Haris, 72770 Reutlingen (DE)
(86) Internationale Anmeldenummer: PCT/EP2019/068696
(87) Internationale Veröffentlichungsnummer: WO 2020/020653

(56) Entgegenhaltungen:
- EP-A1- 2 871 126
- EP-A2- 2 626 233
- CN-U- 206 903 400
- DE-B3- 102016 213 903
- DE-U1- 202015 103 750
- US-B2- 6 631 835

## Beschreibung

Die Erfindung betrifft ein Haltesystem für einen Energiespeicher sowie ein Zweirad, welches einen Rahmen mit einem derartigen Haltesystem aufweist.

### Stand der Technik

Für die Aufnahme von Batterien und Akkumulatoren im Rahmen von Zweirädern, insbesondere von Elektrofahrrädern sind Haltesysteme bekannt, die sowohl eine mechanische Fixierung als auch eine elektronische Kontaktierung ermöglichen. Üblicherweise werden dabei beide Funktionen (Arretierung und Kontaktierung) an unterschiedlichen Stellen der Haltesysteme vorgenommen, um eine Beschädigung der empfindlichen Kontakte zu vermeiden.

Aus der DE 10 2016 213 903 A1 ist beispielsweise ein zweiteiliges Haltesystem gemäß dem Oberbegriff des Anspruchs 1 bekannt, bei dem auf der Schlossseite des Haltesystems ein beweglicher Riegel vorgesehen ist, der in eine entsprechende Ausnehmung des Energiespeichers oder einer an dem Energiespeicher angebrachten Haltevorrichtung eingreift.

Aus der Schrift DE 697 34 265 T2 ist eine Schale bekannt, die zur Aufnahme eines Batteriebehälters am Rahmen eines Fahrrads angebracht ist. Zur Arretierung wird dabei ein Sperrhaken mit einer Feder beschrieben, der durch das Einschieben des Batteriebehälters in die Schale zunächst zurückgedrückt wird und dann in eine Eingriffsnut des Batteriebehälters eingreift.

Aus der Schrift WO 2017/009637 A1 ist eine weitere Arretierung einer Batterie in einem Gehäuse an einem Fahrradrahmen bekannt. Hierbei kann ein mit einem Schloss verbundenes Drehelement ein in der Halterung befindliches Hebelelement sperren, um die Bewegung eines Schließriegels zu verhindern. Aus der Schrift EP 2 280 436 A2 ist eine Arretierung eines Batteriepacks bekannt, bei dem eine drehbar an einer Feder befestigte Schließ-Platte in einen Schließ-Pin greift.

### Offenbarung der Erfindung

Mit der vorliegenden Erfindung soll die Aufgabe erfüllt werden, ein Haltesystem zu beschreiben, welches für die Arretierung eines Energiespeichers, insbesondere für ein elektrisch betreibbares Zweirad, verwendet werden kann. Hierbei ist das Haltesystem gemäß der unabhängigen Ansprüche derart ausgelegt, dass es in der Arretierungs- bzw. Verriegelungsstellung keine Kräfte von dem Energiespeicher auf das Haltesystem überträgt.

Das Haltesystem weist dabei ein Schloss auf, welches einen beweglichen Schloss-Pin besitzt. Dieser Schloss-Pin greift derart in die Öffnung eines ebenfalls beweglichen Schließriegels ein, dass durch die Betätigung des Schlosses und somit des Schloss-Pins der Schließriegel von der Verriegelungsstellung in eine Entriegelungsstellung bzw. umgekehrt bewegt werden kann. Hierzu wird der Schloss-Pin mechanisch an der Innenseite der Öffnung entlang bewegt, zum Beispiel indem er durch das Schloss gedreht wird. Der Kern der Erfindung besteht dabei darin, dass der Schließriegel in der Öffnung derart ausgestaltet ist, dass eine nach innen gerichtete erste Ausformung vorgesehen ist, die In Verbindung mit dem Schloss-Pin die Beweglichkeit des Schließriegels zumindest in der Verriegelungsstellung einschränkt.

Durch diese Ausgestaltung lässt sich der Schließriegel nicht in eine Entriegelungsstellung bzw. in eine Stellung bringen, in der der Energiespeicher entnommen werden kann, insbesondere ohne Betätigung des Schlosses.

Die Ausformung ist erfindungsgemäß in Form einer Stütze ausgebildet.

Somit ist der Schloss-Pin als Anschlag für die erste Ausformung in der Verriegelungsstellung vorgesehen. Hierzu kann vorgesehen sein, dass der Anschlag, das heisst der mechanische Kontakt zwischen Ausformung beziehungsweise Stütze und Schloss-Pin erst nach der Überwindung einer (geringen) Distanz erreicht wird. Somit kann erreicht werden, dass ein kleines Spiel vorgesehen ist, so dass Vibrationen nicht direkt von der ersten Ausformung auf den Pin übertragen werden. Diese Distanz, die durch die körperliche Beabstandung zwischen der ersten Ausformung/Stütze und Schloss-Pin überwunden werden muss, ermöglicht es zudem, dass keine Kräfte während der Nutzung des eingebrachten Energiespeichers auf den Schloss-Pin beziehungsweise das damit verbundene Schloss ausgeübt wird. Durch diese Kraftentkopplung wird eine Beschädigung des Schlosses durch Vibrationen vermieden.

Das Schloss ist derart vorgesehen, dass es den Schloss-Pin in der Öffnung des Schließriegels bewegt. Hierbei kann es sich beispielsweise um eine Drehbewegung handeln, die den Schloss-Pin aus dem Bereich in einen anderen Teil der Öffnung herausdreht, in dem er als Anschlag für die erste Ausformung dienen kann.

Der Schließriegel ist erfindungsgemäß drehbar gelagert.

Hierzu kann ein Fußpunkt beziehungsweise Drehpunkt vorgesehen sein, an dem der Schließriegel drehbar gelagert ist. Im oberen Teil kann der Schließriegel dagegen mit der Öffnung und einer Nase ausgestaltet sein, die drehbar in eine entsprechende Aufnahme des Energiespeichers oder einer Halteplatte am Energiespeicher eingedreht werden kann. Die Drehung des Schließriegels um den Drehpunkt im unteren Bereich kann dabei durch die Betätigung des Schlosses bzw. des Schloss-Pins erreicht werden.

In einer Weiterbildung der Erfindung kann eine zweite Ausformung im äußeren, dem Energiespeicher zugewandten Bereich des Schließriegels vorgesehen sein. Diese zweite Ausformung kann eine Nase bilden, die den Energiespeicher in der Verriegelungsstellung arretiert. Weiterhin kann diese zweite Ausformung derart ausgestaltet sein, dass die zweite Ausformung beim Einsetzen des Energiespeichers den Schließriegel zur Seite bewegt, zum Beispiel in einer Drehbewegung, um so den Weg für den Energiespeicher in das Haltesystem frei zu geben.

Weitere Vorteile ergeben sich aus der nachfolgenden Beschreibung von Ausführungsbeispielen beziehungsweise aus den abhängigen Patentansprüchen.

### Kurze Beschreibung der Zeichnungen

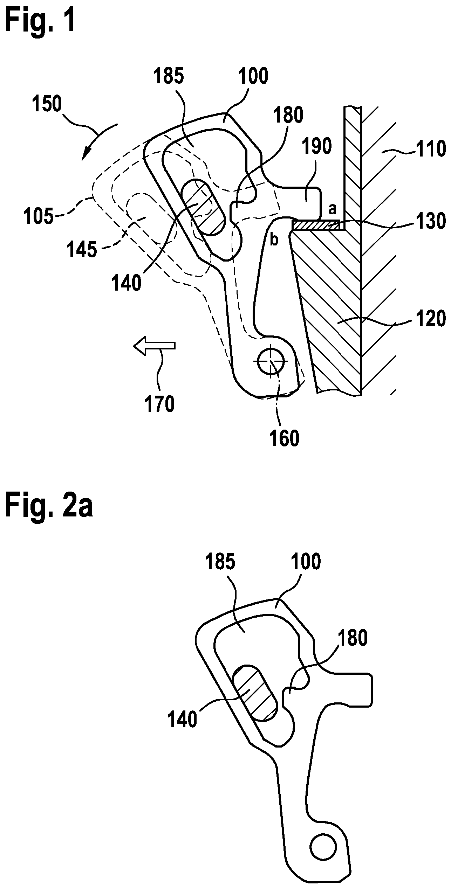

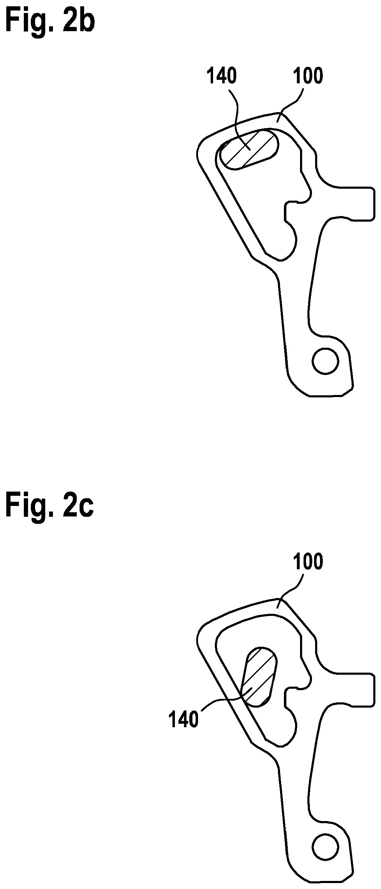

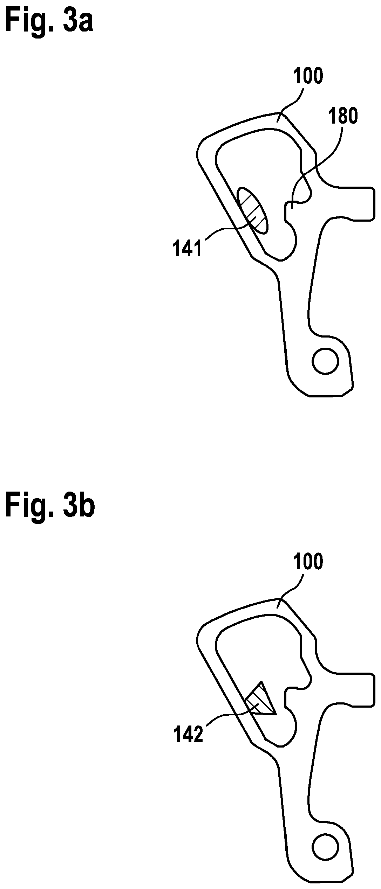

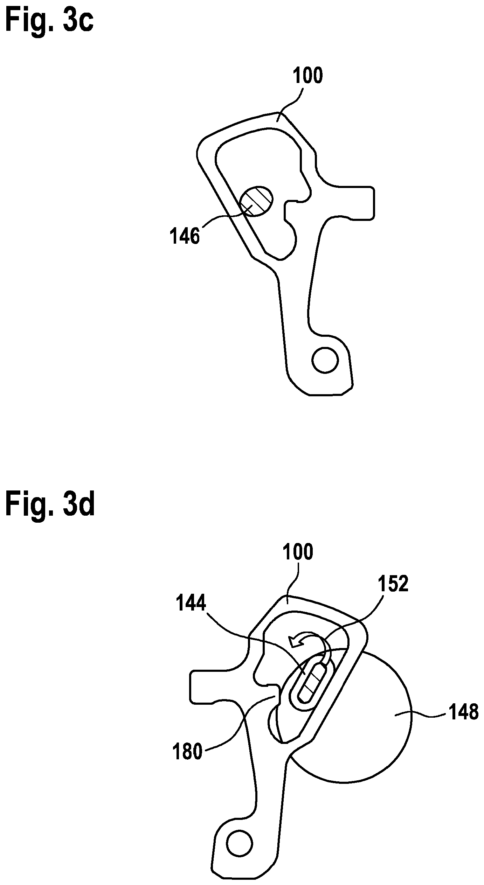

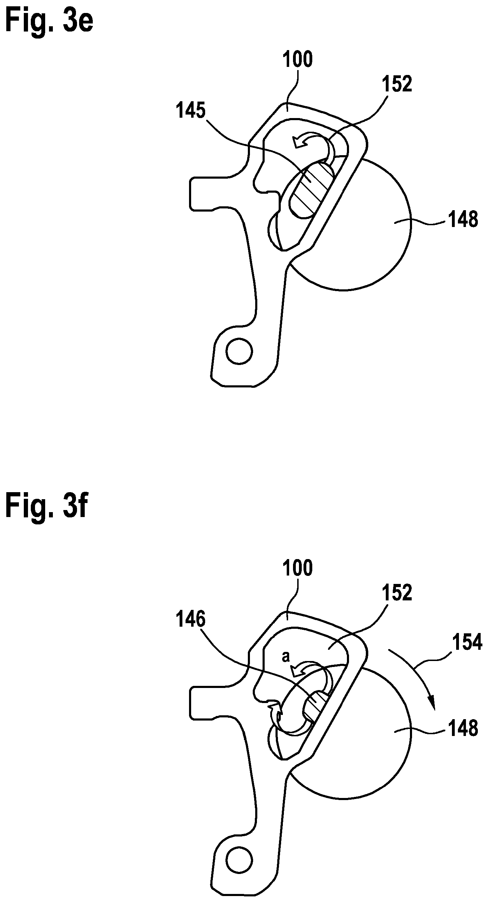

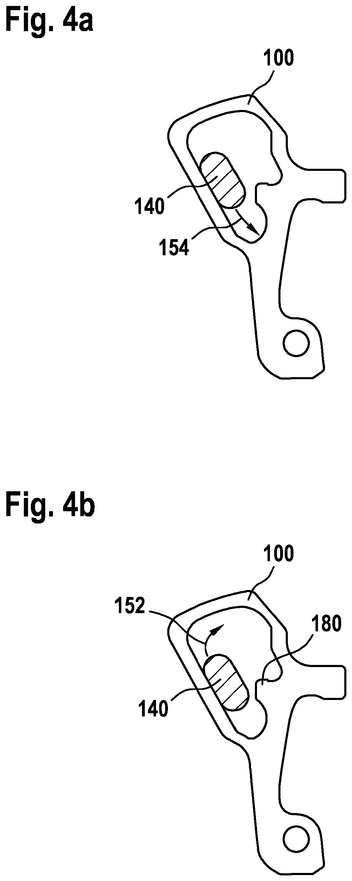

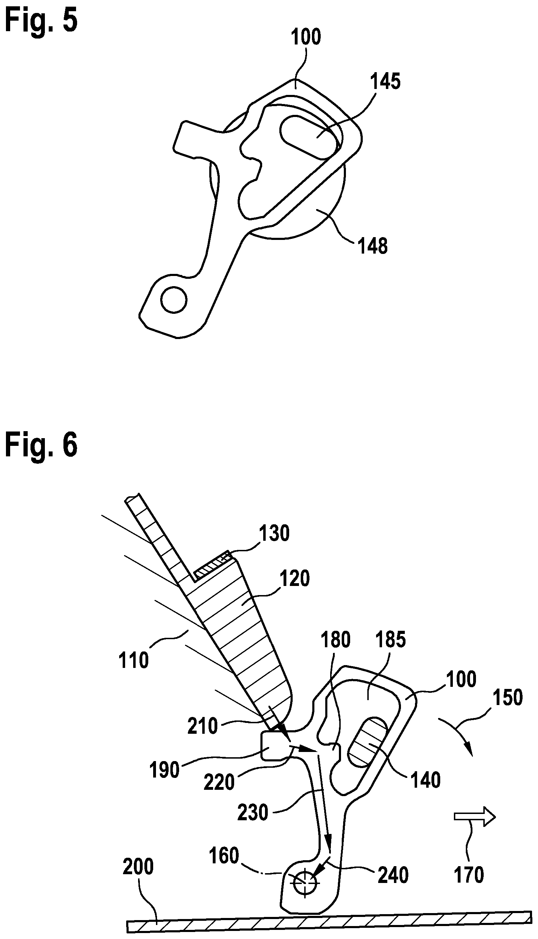

In der Figur 1 werden die verschiedenen Stellungen des erfindungsgemäßen Schließriegels beziehungsweise Haltesystems gezeigt. Die Figuren 2a bis c zeigen verschiedene Positionen des Schloss-Pins gegenüber der ersten Ausformung. In den Figuren 3a bis f werden verschiedene Ausgestaltungen der Schloss-Pin Geometrie dargestellt. Anhand der Figuren 4a und b werden unterschiedliche Drehrichtungen des Schloss-Pins gezeigt. Die Figur 5 zeigt den Schließriegel sowie die Schloss-Pin in der Entriegelungsstellung. In der Figur 6 wird beispielhaft das Einsetzen des Energiespeichers und die Funktion der zweiten Ausformung des Schließriegels dargestellt.

### Ausführungsformen der Erfindung

In der Figur 1 wird der Schließmechanismus des erfindungsgemäßen Haltesystems beschrieben. Hierbei ist ein Schließriegel 100 vorgesehen, der eine Öffnung 185 aufweist. In dieser Öffnung 185 ist eine erste Ausformung 180 in Form eines Stützelements ausgeformt, die in der Verriegelungsstellung gegenüber einem Schloss-Pin 140 angeordnet ist. Weiterhin ist eine zweite Ausformung 190 vorgesehen, die vom Schließriegel 100 nach außen, von der Öffnung 185 weggerichtet ist. Diese zweite Ausformung 190, zum Beispiel eine Nase, greift in eine entsprechende Halterung 130 des Energiespeichers 110 ein und arretiert ihn entsprechend mechanisch. Dabei kann vorgesehen sein, dass die Halterung 130 Teil des Energiespeichers 110 oder einer auf den Energiespeicher 110 aufgebrachten Haltevorrichtung beziehungsweise Halteplatte 120 ist. Wie aus der Figur 1 zu entnehmen ist, ist der Schließriegel 100 drehbar in der Drehrichtung 150 an einem Fußpunkt 160 gelagert. Durch diese drehbare Lagerung kann der Schließriegel 100 von der Verriegelungsstellung in eine Entriegelungsstellung 105 (gestrichelt in der Figur 1 gezeigt und erneut in Figur 5) und umgekehrt gebracht werden. Hierbei drückt beim Verriegeln bzw. Arretieren die zweite Ausformung 190 auf die Halterung 130, so dass eine mechanische Fixierung erfolgt.

Die Bewegung des Schließriegels 100 wird durch ein Schloss 148 erzeugt, durch das der Schloss-Pin 140 in seiner Position verändert werden kann (siehe zur Verdeutlichung auch die Figur 5, die den Schloss-Pin 145 in der Entriegelungsstellung 105 zeigt). Durch die Betätigung des Schlosses 148 lässt sich der Schloss-Pin 140 in der Öffnung 185 bewegen und so den Schließriegel 100 von einer Stellung in die andere verdrehen.

Die erste Ausformung 180 sowie der Schloss-Pin 140 in der Verriegelungsstellung sind beabstandet voneinander angeordnet, so dass kein direkter mechanischer Kontakt zwischen beiden Elementen vorliegt. Durch diese beabstandete Anordnung kann erreicht werden, dass Vibrationen des Energiespeichers 110 bei der Nutzung, zum Beispiel bei der Halterung an oder in einem Fahrradrahmen während der Fahrt, nicht auf den Schloss-Pin 140 und somit auf das Schloss 148 übertragen werden und somit der Schloss-Pin 140 und das Schloss 148 belastet werden. Durch diese erfindungsgemäße Ausgestaltung kann somit eine Krafteinkopplung in Längsrichtung 170 auf das Schloss 148 vermieden werden.

In den Figuren 2a bis c werden verschiedene Positionen des Schloss-Pins 140 innerhalb der Öffnung 185 des Schließriegels 100 gezeigt. Die Figuren 3a bis f zeigen beispielhaft verschiedene Ausgestaltungen des Schloss-Pins 141 bis 146. In den Figuren 3d bis f sowie den Figuren 4a und b werden zusätzlich verschiedene (Dreh-)Bewegungen des Schloss-Pins 140 innerhalb der Öffnung 185 gezeigt. Hierbei kann der Schloss-Pin 140 nach oben (in Richtung 152) oder nach unten (in Richtung 154) aus dem Bereich des Teils der Öffnung 185 herausgedreht oder bewegt werden, in dem er als Anschlag für die erste Ausformung 180 verwendet werden kann.

Anhand der Figur 6 wird eine weitere vorteilhafte Ausgestaltung des Schließriegels 100 beziehungsweise der daran ausgebildeten zweiten Ausformung 190 dargestellt. Beim Einsetzen des Energiespeichers 110 z.B. in den Rahmen 200 eines Zweirads, kann der Zustand vorliegen, dass der Schließriegel 100 im Weg steht. Durch eine besondere Ausgestaltung der zweiten Ausformung 190 kann erreicht werden, dass beim Einsetzen des Energiespeichers 110 oder einer an dem Energiespeicher 100 angebrachten Halteplatte 120 die beim Aufsetzen auf der zweiten Ausformung 190 aufgebrachte Kraft 210 weitergeleitet und in eine Drehung um den Fußpunkt 160 umgewandelt wird. Hierbei wird die Kraft 210 innerhalb des Schließriegels 100 zunächst entlang der zweiten Ausformung 190 und dann entlang der Kraftlinien 220, 230 und 240 weitergeleitet. Da in diesem Fall der Schloss-Pin 140 außerhalb des Bereichs der Öffnung 185 liegt, in dem er als Anschlag für die erste Ausformung 180 im Inneren der Öffnung 185 dienen kann, lässt sich der Schließriegel 100 entsprechend in Drehrichtung 150 drehen.

## Patentansprüche

1. Haltesystem für einen Energiespeicher (110), wobei das Haltesystem zur Halterung
• ein Schloss (148) mit einem Schloss-Pin (140) aufweist, und
• einen Schließriegel (100) aufweist, welcher
∘ beweglich gelagert ist, und
∘ eine Öffnung (185) aufweist, in die der Schloss-Pin (140) eingreift, wobei der Schloss-Pin (140) durch Betätigung des Schlosses den Schließriegel (100) bewegt,
∘ in einer Verriegelungsstellung den Energiespeicher (110) mechanisch im Haltesystem arretiert, und
∘ in einer Entriegelungsstellung (105) die Arretierung des Energiespeicher (110) löst,
wobei der Schließriegel (100) drehbar gelagert ist, wobei vorgesehen ist, dass die Bewegung des Schloss-Pins (140) in der Öffnung (185) eine Drehung bewirkt,
**dadurch gekennzeichnet dass**
der Schließriegel (100) in der Öffnung (185) eine erste Ausformung (180) aufweist, wobei die Ausformung (180) in Form einer Stütze (180) ausgebildet ist, und
wobei die Position des Schloss-Pins (140) und die Anordnung der Stütze (180) in der Öffnung (185) in der Verriegelungsstellung derart vorgesehen ist, dass die Beweglichkeit des Schließriegels (100) eingeschränkt gegenüber der Entriegelungsstellung (105) ist und in der Verriegelungsstellung der Schloss-Pin (140) Anschlag für die erste Ausformung (180) dient.

2. Haltesystem nach Anspruch 1, **dadurch gekennzeichnet** das der Anschlag nach Überwindung einer Distanz erreicht wird.

3. Haltesystem nach einem der vorhergehenden Ansprüche, **dadurch gekennzeichnet dass** der Schloss-Pin (140) zur Erreichung der Entriegelungsstellung (105) des Schließriegels (100) innerhalb der Öffnung (185) bewegt wird, wobei vorgesehen ist, dass der Schloss-Pin (140) in der Entriegelungsstellung (105) nicht als Anschlag für die erste Ausformung (180) dient.

4. Haltesystem nach einem der vorhergehenden Ansprüche, **dadurch gekennzeichnet dass** der Schließriegel (100) eine von der Öffnung (185) wegführende zweite Ausformung (190) aufweist, welche in der Verriegelungsstellung in eine Aufnahme zur Arretierung des Energiespeichers (110) eingreift, insbesondere durch eine Drehbewegung.

5. Haltesystem nach Anspruch 4, **dadurch gekennzeichnet dass** die zweite Ausformung (190) derart gestaltet ist, dass der Energiespeicher (110) oder eine am Energiespeicher (110) angebrachte Halteplatte (120) beim Einsetzen in die Halterung den Schließriegel in die Entriegelungsstellung (105) bewegt.

6. Zweirad mit einem Rahmen, wobei in dem Rahmen ein Haltesystem nach einem der Ansprüche 1 bis 5 angeordnet ist.

## Claims

1. Retaining system for an energy store (110), wherein the retaining system for holding purposes
• has a lock (148) with a lock pin (140), and
• has a locking latch (100), which
∘ is movably mounted, and
∘ has an opening (185) in which the lock pin (140) engages, the lock pin (140) moving the locking latch (100) by actuating the lock,
∘ in a locking position, mechanically locking the energy store (110) in the retaining system, and
∘ in a release position (105), releasing the locking of the energy store (110),
wherein the locking latch (100) is rotatably mounted, wherein it is provided that the movement of the lock pin (140) in the opening (185) causes a rotation,
**characterized in that**
the locking latch (100) in the opening (185) has a first moulding (180), the moulding (180) being in the form of a support (180), and
wherein the position of the lock pin (140) and the arrangement of the support (180) in the opening (185) in the locking position is provided in such a way that the movability of the locking latch (100) is restricted in comparison to the release position (105) and, in the locking position, the lock pin (140) serves as a stop for the first moulding (180).

2. Retaining system according to Claim 1, **characterized in that**
the stop
is reached after a distance is overcome.

3. Retaining system according to either of the preceding claims, **characterized in that** the lock pin (140) is moved within the opening (185) to reach the release position (105) of the locking latch (100), it being provided that the lock pin (140) in the release position (105) does not serve as a stop for the first moulding (180).

4. Retaining system according to any one of the preceding claims, **characterized in that** the locking latch (100) has a second moulding (190) which leads away from the opening (185) and, in the locking position, engages in a receptacle for locking the energy store (110), in particular by means of a rotational movement.

5. Retaining system according to Claim 4, **characterized in that** the second moulding (190) is designed in such a way that the energy store (110) or a retaining plate (120) mounted on the energy store (110), when inserted into the holder, moves the locking latch into the release position (105).

6. Two-wheeled vehicle with a frame, wherein a retaining system according to any one of Claims 1 to 5 is arranged in the frame.

## Revendications

1. Système de retenue pour un accumulateur d'énergie (110), le système de retenue présentant, pour la retenue,
• une serrure (148) comprenant une broche (140) de serrure, et
• un verrou (100) qui
∘ est monté de manière mobile, et
∘ présente une ouverture (185) dans laquelle s'engage la broche (140) de serrure, la broche (140) de serrure déplaçant le verrou (100) par actionnement de la serrure,
∘ bloque mécaniquement l'accumulateur d'énergie (110) dans le système de retenue dans une position de verrouillage, et
∘ dans une position de déverrouillage (105), libère le blocage de l'accumulateur d'énergie (110),
le verrou (100) étant monté de manière rotative, le mouvement de la broche (140) de serrure dans l'ouverture (185) provoquant une rotation,
**caractérisé en ce que**
le verrou (100) présente dans l'ouverture (185) une première formation (180), la formation (180) étant réalisé sous la forme d'un support (180), et
la position de la broche (140) de serrure et l'agencement du support (180) dans l'ouverture (185) dans la position de verrouillage sont prévues de telle sorte que la mobilité du verrou (100) est limitée par rapport à la position de déverrouillage (105) et que, dans la position de verrouillage, la broche (140) de serrure sert de butée pour la première formation (180).

2. Système de retenue selon la revendication 1, **caractérisé en ce que** la butée est atteinte après avoir parcouru une distance.

3. Système de retenue selon l'une des revendications précédentes, **caractérisé en ce que** la broche (140) de serrure est déplacée à l'intérieur de l'ouverture (185) de façon à atteindre la position de déverrouillage (105) du verrou (100), étant prévu que la broche (140) de serrure ne sert pas de butée pour la première formation (180) dans la position de déverrouillage (105).

4. Système de retenue selon l'une des revendications précédentes, **caractérisé en ce que** le verrou (100) présente une deuxième formation (190) allant en s'éloignant de l'ouverture (185), qui, en position de verrouillage, s'engage dans un logement pour bloquer l'accumulateur d'énergie (110), en particulier par un mouvement de rotation.

5. Système de retenue selon la revendication 4, **caractérisé en ce que** la deuxième formation (190) est conçue de telle sorte que l'accumulateur d'énergie (110) ou une plaque de retenue (120) fixée à l'accumulateur d'énergie (110) déplace le verrou dans la position de déverrouillage (105) lors de l'insertion dans le support.

6. Véhicule à deux roues comprenant un cadre, dans lequel est agencé un système de retenue selon l'une des revendications 1 à 5.
